# EUROPÄISCHE PATENTSCHRIFT

(11) **EP 0 628 797 B1**
(45) Veröffentlichungstag und Bekanntmachung des Hinweises auf die Patenterteilung: **17.03.1999**
(21) Anmeldenummer: 94201411.9
(22) Anmeldetag: 18.05.1994
(51) Int. Cl.: G01K 11/06

(54) **Kältespeicherpatrone**
Cold accumulator cartridge
Cartouche pour accumulateur de froid

(30) Priorität: 25.05.1993 DE 4317341
(43) Veröffentlichungstag der Anmeldung: 14.12.1994
(73) Patentinhaber: Philips Patentverwaltung GmbH, 22335 Hamburg (DE); Koninklijke Philips Electronics N.V., 5621 BA Eindhoven (NL)
(72) Erfinder: Gawron, Klaus, c/o Philips Patentverwaltung GmbH, D-20097 Hamburg (DE); Prandl, Reinhard, c/o Philips Patentverwaltung, D-20097 Hamburg (DE)
(74) Vertreter: Volmer, Georg, Dipl.-Ing.

(56) Entgegenhaltungen:
- DE-A- 1 551 368
- FR-A- 2 455 732
- GB-A- 2 235 969

## Beschreibung

Die Erfindung bezieht sich auf eine Kältespeicherpatrone mit einem Gehäuse, welches einen Innenraum aufweist, in welchen ein Kältespeichermittel eingefüllt ist, wobei am Gehäuse eine Kontrolleinrichtung zur Anzeige des Ladungszustandes des Kältespeichermittels angeordnet ist.

Bei einer durch die DE-A 1 551 368 bekannten Anordnung dieser Art ist der Ladungszustand des Kältespeichermittels mittels einer Temperaturanzeigevorrichtung kontrollierbar. Wenn das Kältespeichermittel seine Schmelztemperatur bzw. Kristallisationstemperatur unterschritten hat, ist seine Kältespeicherfähigkeit erschöpft und der Ladevorgang abgeschlossen.

Weiterhin ist aus GB -A-2 235 969 ein Kühlschrank mit einer Kontrolleinrichtung zur Anzeige einer Betriebsstörung bekannt, wobei die Kontrolleinrichtung einen transparenten oder durchsichtigen Behälter umfaßt, der teilweise mit einer Flüssigkeit gefüllt ist, die bei der normalen Betriebstemperatur des Fachs in dem die Kontrolleinrichtung angeordnet ist, gefroren ist. Der Behälter kann in dem Fach in einer Stellung angeordnet sein und solange verbleiben, bis die Flüssigkeit gefroren ist. Dann wird der Behälter umgedreht, sodaß dann die gefrorene Flüssigkeit den oberen Teil des Behälters einnimmt.

Der Erfindung liegt die Aufgabe zugrunde, eine einfachere Anordnung zur Indikation des vollen Ladezustandes zu schaffen.

Die Lösung gelingt dadurch, daß die Kontrolleinrichtung eine Indikatorsubstanz aus einem entertischen wässrigen Gemisch eines Salzes enthält, deren Schmelztemperatur Ti niedriger als die Schmelztemperatur Ts des

Kältespeichermittels ist, daß die Indikatorsubstanz in einem Füllbehälter eingeschlossen ist, welcher wärmeleitenden Kontakt zum Kältespeichermittel hat, daß der Füllbehälter einen optisch transparenten Wandbereich aufweist, und daß die Kontrolleinrichtung derart mit der Kältespeicher- patrone verbunden ist, daß der transparente Wandbereich von außerhalb der Kältespeicherpatrone sichtbar ist.

Bei der erfindungsgemäßen Lösung erkennt man den Zustand der Volladung des Kältespeichermittels daran, daß die Indikatorsubstanz kristallisiert ist. Da die Kristallisationstemperatur der Indikatorsubstanz niedriger als die des Kältespeichermittels ist, bedeutet die Kristallisation der Indikatorsubstanz, daß das Kältespeichermittel mit Sicherheit vollständig kristallisiert und somit vollständig geladen ist. Die Kristallisation der Indikatorsubstanz ist durch eine Farbänderung optisch erkennbar.

Eine erfindungsgemäße Kontrolleinrichtung ist besonders einfach aufgebaut. Eine einfache "Ja-Nein-Anzeige" bedeutet im Gegensatz zu einer Temperaturanzeige für den Benutzer eine vereinfachte Ablesemöglichkeit.

Zur Verbesserung der Erkennbarkeit der Kristallisation der Indikatorsubstanz ist vorgesehen, daß in den Füllbehälter farbauffällige Festkörper eingebracht sind, deren spezifisches Gewicht von demjenigen der verflüssigten Indikatorsubstanz abweicht. Wenn die Festkörper sich beim Schwenken der Kältespeicherpatrone nicht mehr bewegen, ist die Kristallisation erfolgt.

Die Schmelztemperaturen des Kältespeichermittels und der Indikatorsubstanz sollten einander eng benachbart sein, damit nicht das Erreichen einer unnötig hohen Temperatur abgewartet werden muß. Deshalb ist bevorzugt vorgesehen, daß die Schmelztemperatur Ti der Indikatorsubstanz um 1 bis 5 K niedriger als die Schmelztemperatur Ts des Kältespeichermittels ist.

Der Unterschied der Schmelztemperaturen kann besonders gering gewählt werden, wenn der Füllbehälter der Kontrolleinrichtung in den Bereich des Kältespeichermittels ragt, welcher beim Kältespeichervorgang am spätesten kristallisiert.

Wenn die Indikatorsubstanz ein eutektisches wässriges Gemisch eines anorganischen Salzes ist, ergibt sich eine praktisch übergangsfreie Kristallisationstemperatur, so daß die Beendigung des Ladevorganges nicht erst dann festgestellt wird, wenn ein breiter Bereich der Kristallisationstemperatur einer nicht eutektischen Lösung unterschritten ist.

Eine bevorzugte Ausführungsform der Erfindung ist dadurch gekennzeichnet, daß das Kältespeichermittel eine Mischung aus Kaliumchlorid, Glycerin und Wasser mit einem Schmelzpunkt von ca. -12°C ist, und daß die Indikatorsubstanz eine 36,8%ige wässrige Lösung von Kaliumhydrogenphosphat (K₂HPO₄) ist.

Damit eine unvermeidbare Volumenänderung der Indikatorsubstanz bei ihrer Kristallisation aufgefangen werden kann, ist vorgesehen, daß der Füllbehälter aus einem bei Betriebstemperatur elastisch dehnbaren Kunststoff besteht. Eine vorteilhafte konstruktive Lösung ist dadurch gekennzeichnet, daß der Füllbehälter mit wärmeleitendem Kontakt in ein Schutzgehäuse eingesetzt ist, und daß das Schutzgehäuse durch eine Bodenöffnung der Kältespeicherpatrone in das Kältespeichermittel ragt.

Beispiele für bei verschiedenen Temperaturen kristallisierende wässrige Lösungen von Indikatorsubstanzen sind:

| | | |
|---|---|---|
| 1. | Kaliumhydrogenphosphat K₂HPO₄ | 36.8%-Lösung |
| | Schmelzpunkt: -13,5°C | |
| | | |
| 2. | Ammoniumhydrogenfluorid NH₄HF₂ | 23.6%-Lösung |
| | Schmelzpunkt: -14,8°C | |
| | | |
| 3. | Ammoniumchlorid NH₄Cl | 19.5%-Lösung |
| | Schmelzpunkt: -16,0°C | |
| | | |
| 4. | Natriumacetat CH₃COONa | 23.3%-Lösung |
| | Schmelzpunkt: -18,0°C | |

Die Kristallisation dieser eutektischen Substanzen ist durch einen Farbumschlag deutlich erkennbar. Die Volumenänderung dieser Substanzen liegt im Bereich von 3 bis 7% und kann von aus geeignetem Kunststoff bestehenden Füllbehältern ohne weiteres aufgefangen werden.

Geeignet ist auch eine wässrige 19,5%ige Kaliumchlorid-Lösung, bei welcher durch Zugabe von 5 bis 10 Vol.% Glycerin eine Schmelztemperatur im Bereich von -12,4°C bis 14,1°C eingestellt werden kann.

Allgemein sind solche Indikatorsubstanzen geeignet, welche verträglich mit dem Material des Füllbehälters sind, welche eine gut erkennbare Farbänderung bei der Kristallisation und eine niedrige Volumenänderung zeigen, und welche zu möglichst geringer Unterkühlung vor der Kristallisation neigen.

Die Erfindung wird anhand der Beschreibung von in den Figuren dargestellten Ausführungsbeispielen näher erläutert.
- Fig. 1: zeigt im Teil-Querschnitt ein erstes Ausführungsbeispiel der Erfindung
- Fig. 2: zeigt einen Querschnitt durch eine Ausführungsvariante einer erfindungsgemäßen Kontrolleinrichtung mit eingebrachten Festkörpern
- Fig. 3: zeigt die Kontrolleinrichtung nach Fig. 2 in um 180° geschwenkter Lage.

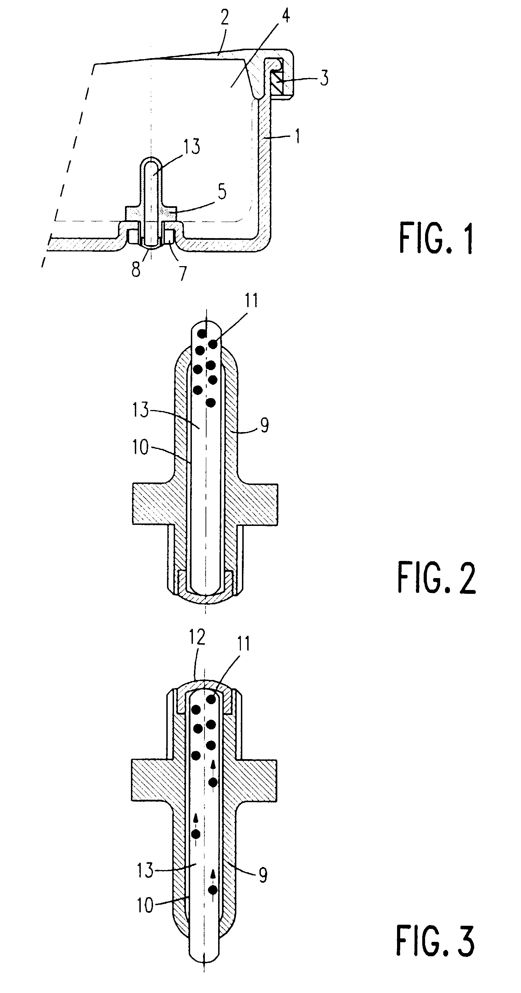

Das Gehäuse der in Fig. 1 dargestellten Kältespeicherpatrone umfaßt eine Bodenwanne 1 und einen Deckel 2, welcher mittels der Dichtung 3 abgedichtet an der Bodenwanne 1 befestigt ist. Der Innenraum des Gehäuses ist mit einem Kältespeichermittel 4, einer Mischung aus Kaliumchlorid, Glycerin und Wasser gefüllt, welche einen Schmelzpunkt von ca. -12°C aufweist.

Durch eine Öffnung der Bodenwand der Bodenwanne 1 ragt eine Kontrolleinrichtung, welche mittels der Mutter 7 flüssigkeitsdicht an die Bodenwand geschraubt ist. Das Füllgehäuse 5 besteht aus Polyethylen, welches temperaturbeständig und auch bei niedrigen Temperaturen genügend elastisch ist. Das Füllgehäuse 5 ist mit 36,8%iger wässriger Lösung von Kaliumhydrogenphosphat gefüllt. Durch die transparente Stirnwand 8 des Füllgehäuses 5 kann der Kristallisationszustand der Indikatorsubstanz 13 von außen optisch festgestellt werden.

Eine zur Einführung der Kontrolleinrichtung in einer Gehäusewand der Kältespeicherpatrone vorgesehene öffnung kann vorteilhaft als Einfüllöffnung für das Kältespeichermittel verwendet werden.

Die alternative Ausführungsform einer erfindungsgemäßen Kontrolleinrichtung nach Fig. 2 weist ein Schutzgehäuse 9 auf, welches einen dünnwandigen, mit der Indikatorsubstanz 13 gefüllter Füllbehälter 10 umschließt. Der Einbau in eine Bodenwand einer Kältespeicherpatrone erfolgt entsprechend Fig. 1.

Farbauffällige Festkörperkügelchen 11 sind in die Indikatorsubstanz 13 eingelagert. Sie haben ein geringeres spezifisches Gewicht als die Indikatorsubstanz und schwimmen gemäß Fig. 2 bei einer Einbaulage nach Fig. 1 oben. Wenn die Kältespeicherpatrone um 180° geschwenkt wird, nimmt die Kontrolleinrichtung die in Fig. 3 dargestellte Lage ein. Bei voller Aufladung des Kältespeichermediums 13 verbleiben die Kügelchen 11 in der kristallisierten Indikatorsubstanz 13 in der in Fig. 2 gezeigten Lage. Anderenfalls steigen sie gemäß Fig. 3 zur durchsichtigen Abschlußkappe 12 hin, wodurch erkennbar ist, daß der Ladevorgang noch nicht beendet wurde.

Falls das spezifische Gewicht der Kügelchen 11 größer als dasjenige der Indikatorsubstanz gewählt ist, würde die Bewegungsrichtung der Kügelchen 11 entsprechend umgekehrt.

## Patentansprüche

1. Kältespeicherpatrone mit einem Gehäuse (1,2), welches einen Innenraum aufweist, in welchen ein Kältespeichermittel (4) eingefüllt ist, wobei am Gehäuse (1) eine Kontrolleinrichtung zur Anzeige des Ladungszustandes des Kältespeichermittels angeordnet ist,
dadurch gekennzeichnet, daß die Kontrolleinrichtung eine
Indikatorsubstanz (13) aus einem entektischen wässrigen Gemisch eines Salzes enthält, deren Schmelz- und Kristallisationstemperatur Ti niedriger als die Schmelztemperatur Ts des Kältespeichermittels (4) ist, daß die Indikatorsubstanz (13) in einem Füllbehälter (10) eingeschlossen ist, welcher wärmeleitenden Kontakt zum Kältespeichermittel (4) hat, daß der Füllbehälter (10) einen optisch transparenten Wandbereich (8) aufweist, und daß die Kontrolleinrichtung derart mit der Kältespeicherpatrone verbunden ist, daß der transparente Wandbereich (8) von außerhalb der Kältespeicherpatrone sichtbar ist.

2. Kältespeicherpatrone nach Anspruch 1,
dadurch gekennzeichnet, daß in den Füllbehälter (10) farbauffällige Festkörper (11) eingebracht sind, deren spezifisches Gewicht von demjenigen der verflüssigten Indikatorsubstanz (13) abweicht.

3. Kältespeicherpatrone nach Anspruch 1 oder 2,
dadurch gekennzeichnet, daß die Schmelztemperatur Ti der Indikatorsubstanz (13) um 1 bis 5 K niedriger als die Schmelztemperatur Ts des Kältespeichermittels (4) ist.

4. Kältespeicherpatrone nach einem der Ansprüche 1 bis 3,
dadurch gekennzeichnet, daß der Füllbehälter (10) der Kontrolleinrichtung in den Bereich des Kältespeichermittels (4) ragt, welcher beim Kältespeichervorgang am spätesten kristallisiert.

5. Kältespeicherpatrone nach einem der Ansprüche 1 bis 4,
dadurch gekennzeichnet, daß die Indikatorsubstanz (13) ein eutektisches wässriges Gemisch eines anorganischen Salzes ist.

6. Kältespeicherpatrone nach Anspruch 5,
dadurch gekennzeichnet, daß das Kältespeichermittel (4) eine Mischung aus Kaliumchlorid, Glycerin und Wasser mit einem Schmelzpunkt von ca. -12°C ist, und daß die Indikatorsubstanz (13) eine 36,8%ige wässrige Lösung von Kaliumhydrogenphosphat (K₂HPO₄) ist.

7. Kältespeicherpatrone nach einem der Ansprüche 1 bis 6,
dadurch gekennzeichnet, daß der Füllbehälter (10) aus einem bei Betriebstemperatur elastisch dehnbaren Kunststoff besteht.

8. Kältespeicherpatrone nach einem der Ansprüche 1 bis 7,
dadurch gekennzeichnet, daß der Füllbehälter (10) mit wärmeleitendem Kontakt in ein Schutzgehäuse (9) eingesetzt ist, und daß das Schutzgehäuse (9) durch eine Bodenöffnung der Kältespeicherpatrone in das Kältespeichermittel (4) ragt.

9. Kältespeicherpatrone nach einem der Ansprüche 1 bis 8,
dadurch gekennzeichnet, daß eine zur Einführung der Kontrolleinrichtung in einer Gehäusewand (1,2) vorgesehene öffnung eine Einfüllöffnung für das Kältespeichermittel ist.

## Claims

1. A cold-accumulator cartridge comprising a housing (1,2) having an interior into which a cold-accumulator medium (4) is introduced and the housing (1) having a device for indicating the charging state of the cold-accumulator medium, characterized in that the indicator device comprises an indicator substance (13) of a entectic aqueous mixture of a salt, whose melting and crystallization temperature Ti is lower than the melting temperature Ts of the cold-accumulator medium (4), in that the indicator substance (13) is held in a container (10) which is in heat-conducting contact with the cold-accumulator medium (4), in that the container (10) comprises an optically transparent wall portion (8) and in that the indicator device is connected to the cold-accumulator cartridge in such a manner that the transparent wall portion (8) is visible from outside the cold-accumulator cartridge.

2. A cold-accumulator cartridge as claimed in Claim 1, characterized in that conspicuously coloured solid bodies (11) are introduced into the container (10) whose specific weight differs from that of the liquefied indicator substance (13).

3. A cold-accumulator cartridge as claimed in Claim 1 or 2, characterized in that the melting temperature Ti of the indicator substance (13) is preferably 1 to 5 K lower than the melting temperature Ts of the cold-accumulator medium (4).

4. A cold-accumulator cartridge as claimed in any one of Claims 1 to 3, characterized in that the container (10) of the indicator device projects into the area of the cold-accumulator medium (4) which is the last to crystallize during the cold-accumulating process.

5. A cold-accumulator cartridge as claimed in any one of Claims 1 to 4, characterized in that the indicator substance (13) is a eutectic aqueous mixture of an inorganic salt.

6. A cold-accumulator cartridge as claimed in Claim 5, characterized in that the cold-accumulator medium (4) is a mixture of potassium chloride, glycerine and water having a melting point of approximately -12° C, and in that the indicator substance (13) is a solution of 36.8% potassium hydrogenphosphate (K₂HPO₄) in water.

7. A cold-accumulator cartridge as claimed in any one of Claims 1 to 6, characterized in that the container (10) is made from a synthetic resin which is elastically expandable at the operating temperature.

8. A cold-accumulator cartridge as claimed in any one of Claims 1 to 7, characterized in that a protective housing (9) accommodates the container (10) so as to be in heat-conducting contact therewith, and in that said protective housing (9) projects into the cold-accumulator medium (4) *via* an aperture in the bottom of the cold-accumulator cartridge.

9. A cold-accumulator cartridge as claimed in any one of Claims 1 to 8, characterized in that an aperture which is formed in a wall (1,2) of the housing and into which the indicator device is introduced is a filling hole for the cold-accumulator medium.

## Revendications

1. Cartouche pour accumulateur de froid avec un boîtier (1, 2) qui présente un espace interne dans lequel un agent accumulateur de froid (4) est introduit, un dispositif de contrôle en vue de l'affichage de l'état de charge de l'agent accumulateur de froid étant disposé sur le boîtier (1),
caractérisée en ce que le dispositif de contrôle contient une substance indicatrice à partir d'un mélange aqueux eutectique d'un sel dont la température de fusion et de cristallisation Ti est inférieure à la température de fusion Ts de l'agent accumulateur de froid (4), que la substance indicatrice (13) est contenue dans un récipient de charge (10) qui présente un contact thermoconducteur par rapport à l'agent accumulateur de froid (4), que le récipient de charge (10) présente une zone de paroi (8) optiquement transparente et que le dispositif de contrôle est relié à la cartouche pour accumulateur de froid de telle sorte que la zone de paroi (8) transparente soit visible de l'extérieur de la cartouche pour accumulateur de froid.

2. Cartouche pour accumulateur de froid selon la revendication 1, caractérisée en ce que des corps solides aux couleurs voyantes (11) sont introduits dans le récipient de charge (10), leur poids spécifique étant différent de celui que la substance indicatrice fluidifiée (13).

3. Cartouche pour accumulateur de froid selon l'une des revendications 1 ou 2, caractérisée en ce que la température de fusion Ti de la substance indicatrice (13) est inférieure de 1 à 5 K à la température de fusion Ts de l'agent accumulateur de froid (4).

4. Cartouche pour accumulateur de froid selon l'une des revendications 1 à 3, caractérisée en ce que le récipient de charge (10) déborde du dispositif de contrôle dans la zone de l'agent accumulateur de froid (4) qui se cristallise au plus tard lors du processus d'accumulation du froid.

5. Cartouche pour accumulateur de froid selon l'une des revendications 1 à 4, caractérisée en ce que la substance indicatrice (13) est un mélange aqueux eutectique d'un sel inorganique.

6. Cartouche pour accumulateur de froid selon la revendication 5, caractérisée en ce que l'agent accumulateur de froid (4) est un mélange de chlorure de potassium, de glycérine et d'eau avec un point de fusion d'environ -12°C et que la substance indicatrice (13) est une solution aqueuse à 36,8% d'hydrogénophosphate de potassium (K₂HPO₄).

7. Cartouche pour accumulateur de froid selon l'une des revendications 1 à 6, caractérisée en ce que le récipient de charge (10) se compose d'un plastique élastique à la température de fonctionnement.

8. Cartouche pour accumulateur de froid selon l'une des revendications 1 à 7, caractérisée en ce que le récipient de charge (10) est inséré avec un contact thermoconducteur dans un boîtier de protection (9) et que le boîtier de protection (9) déborde par une ouverture du fond de la cartouche pour accumulateur de froid dans l'agent d'accumulateur de froid (4).

9. Cartouche pour accumulateur de froid selon l'une des revendications 1 à 8, caractérisée en ce qu'une ouverture prévue en vue de l'introduction du dispositif de contrôle dans une paroi du boîtier (1,2) est une ouverture de remplissage pour l'agent accumulateur de froid.
